# EUROPEAN PATENT APPLICATION

(11) **EP 4 187 319 A1**
(43) Date of publication of application: **31.05.2023**
(21) Application number: 22209464.1
(22) Date of filing: 24.11.2022
(51) Int. Cl.: G03B 21/56, G03B 21/60

(54) **PATCH FOR SCREEN DEFECT REPAIR AND METHOD**

(30) Priority: 24.11.2021 CN 202111407503
(71) Applicant: RealD Inc., Beverly Hills, CA 90212 (US)
(72) Inventor: WU, Ching-Chin, Beverly Hills, 90212 (US); CHEN, Wen-Shao, Beverly Hills, 90212 (US)
(74) Representative: Ribeiro, James Michael

(57) **Abstract**

A screen repair patch and a screen flaw repair method. The screen repair patch includes an optical layer, a substrate layer, and an adhesion layer. The optical layer and a screen to be repaired have the same or similar optical performance. The substrate layer has a thickness of 10 to 250 microns. The adhesion layer has a thickness of 5 to 200 microns. In the screen flaw repair method, a repair patch is cut off from a region on a patch sheet corresponding to the position of a flaw of a screen, and the repair patch is attached to the corresponding position of the flaw of the screen by using a joining direction of the screen as an affixing direction of the repair patch. The screen repair patch and the screen flaw repair method of the present invention uses a patch that can be easily affixed and removed and can repair a flaw on site to maintain original optical efficiency and uniformity of a screen, and are applied to a polarization-preserving screen to maintain high polarization contrast, so as to extend the service life of the screen.

## Description

### TECHNICAL FIELD

The present invention relates to a screen repair patch and a screen flaw repair method, particularly to a patch sheet suitable for use in repairing a flaw on a large polarization-preserving screen and a flaw repair method for a large polarization-preserving screen.

### BACKGROUND

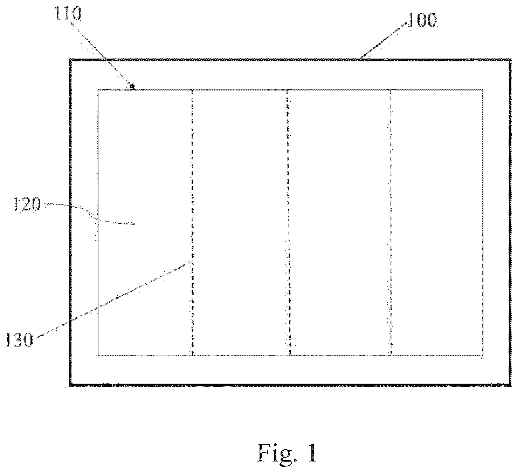

With the ever-increasing development of technologies, the living standards of people improve constantly, and movies have gradually become an indispensable part of the people's lifestyles. Movies are projected onto the screen by a movie projector. The screen reflects light projected by the projector and distribute the light more evenly in a cinema hall. In addition, a polarization-preserving screen can maintain high contrast of left-eye and right-eye polarized images in a polarized 3D stereo movie, thereby improving contrast of stereo images. The cinema hall needs to allow multiple persons to watch a movie. Therefore, a large screen is used in the cinema hall. FIG. 1 is a schematic front view of a typical screen. As shown in FIG. 1, a screen 110 is formed by joining multiple unit panels 120 and is mounted on a frame 100. A joining seam 130 is present between the unit panels 120. If the screen is damaged, it is apparent that the damaged portion deteriorates image quality and reduces stereo contrast and clarity when a movie is shown, and produces a relatively bright or dark spot on the image, severely affecting the film watching experience. If the entire screen has to be replaced or abandoned if a small flaw is caused during production, transportation, or installation, serious waste is incurred. Since the screens is exposed in a place where audience can touch the screens, finger stains that cannot be cleaned or even damage is incurred to the screen. The screen may also be scratched or slightly damaged due to other environmental factors, such as water leakage or careless construction. In such cases, the entire screen needs to be replaced, so that operation of the cinema hall needs to be suspended, and replacement of the screen costs a lot, affecting cost-effectiveness. In addition, the abandoned entire screen is not environmentally-friendly.

Therefore, a screen repair patch and a screen flaw repair method need to be provided to address the above problems.

### SUMMARY

In view of the above defects, the present invention uses a patch that can be easily affixed and removed, and can repair a flaw in the field or on site to maintain original optical efficiency and uniformity of a screen, and are applied to a polarization-preserving screen to maintain high polarization contrast, so as to extend the service life of the screen.

In order to achieve the above objective of the present invention, provided in a first aspect of the present invention is a screen repair patch, comprising: an optical layer, having an optical performance identical or similar to that of a screen to be repaired; a substrate layer, having a thickness of 10 microns (µm) to 250 microns (µm); and an adhesion layer, having a thickness of 5 microns (µm) to 200 microns (µm). The screen repair patch is suitable for use in repairing a flaw on a polarization-preserving screen, i.e. a screen which preserves a polarization state of light reflected by the screen. Preferably the screen repair patch preserves a polarization state of light reflected by the screen repair patch.

In an embodiment of the present invention, the optical layer of the screen repair patch comprises a reflective layer, and the reflective layer is made from the same material as a reflective layer of the screen to be repaired.

In an embodiment of the present invention, the substrate layer of the screen repair patch has a thickness of 20 microns (µm) to 125 microns (µm).

In an embodiment of the present invention, the adhesion layer of the screen repair patch has a thickness of 5 microns (µm) to 100 microns (µm).

In an embodiment of the present invention, the screen repair patch further comprises a release film located on a side of the adhesion layer opposite the substrate layer.

In an embodiment of the present invention, the screen repair patch further comprises a protective film located on a side of the optical layer opposite the substrate layer.

In an embodiment of the present invention, the optical layer and the substrate layer of the screen repair patch are made from the same material.

In an embodiment of the present invention, the screen repair patch is acquired from a particular region of a patch sheet, wherein the screen to be repaired comprises a plurality of joined unit panels, the patch sheet and the unit panels of the screen to be repaired having the same width, and being made from the same material, and the particular region of the patch sheet corresponding to a flawed region of the screen to be repaired.

In an embodiment of the present invention, the substrate layer of the screen repair patch is a flexible material.

In an embodiment of the present invention, the adhesion layer of the screen repair patch is selected from any one of the following materials: an optically clear adhesive, a pressure sensitive adhesive, and a silicone-based adhesive. In addition, laser projectors are widely applied in cinema halls, and the screen typically needs to oscillate to achieve the effect of eliminating laser spots. Therefore, the adhesion layer not only provides adhesion, but also reduces an air gap between the repair material and the screen, so that the repair patch can be affixed and attached to the surface of the screen to be repaired, thereby preventing separation caused by long-term oscillation of the screen.

According to another aspect, provided in the present invention is a screen patch in accordance with the first aspect of the invention, in combination with a screen to be repaired, wherein the optical layer has an optical performance identical or similar to that of the screen to be repaired. Optionally the optical layer comprises a reflective layer, wherein the reflective layer is made from the same material as a reflective layer of the screen to be repaired. Optionally the screen to be repaired comprises a polarization-preserving screen, i.e. a screen which preserves a polarization state of light reflected by the screen.

According to another aspect, provided in the present invention is a repaired screen comprising a screen with a flawed region, and a screen patch in accordance with the first aspect of the invention attached to the flawed region of the screen, wherein the optical layer has an optical performance identical or similar to that of the screen. Optionally the repaired screen comprises a polarization-preserving screen, i.e. a screen which preserves a polarization state of light reflected by the screen.

According to another aspect, provided in the present invention is a screen flaw repair method, comprising: providing a screen, wherein the screen has a joining direction, and is formed by joining a plurality of unit panels in the joining direction; determining one or more flawed regions of the screen; providing a patch sheet, wherein an optical performance of the patch sheet is identical or similar to that of the screen, and the patch sheet may have the same polarization-preserving contrast feature as the screen, and can reflect light to the eyes of an audience with the similar uniformity or polarization contrast, so that movie viewers do not sense any obvious non-uniformity or a stereo contrast difference; defining one or more corresponding repair patch regions on the patch sheet according to the one or more flawed regions of the screen, wherein the one or more repair patch regions are respectively capable of covering the one or more corresponding flawed regions, and forming, on each repair patch region, an attachment direction marker that is removable and parallel to the joining direction of the screen; cutting the one or more repair patch regions off from the patch sheet, so as to acquire one or more repair patches; and respectively attaching the one or more repair patches to the one or more corresponding flawed regions of the screen according to the attachment direction marker.

In an embodiment of the present invention, the patch sheet employed by the screen flaw repair method according to the present invention has the width identical to the width of the unit panel of the screen, and the one or more corresponding repair patch regions corresponding to the one or more flawed regions are defined on the patch sheet according to the one or more flawed regions of the screen.

In an embodiment of the present invention, in the screen flaw repair method according to the present invention, attaching to the flawed region is performed in a manner in which a sound transmission hole of the repair patch is substantially aligned with a corresponding sound transmission hole of the screen.

In an embodiment of the present invention, the patch sheet employed by the screen flaw repair method according to the present invention comprises: an optical layer, having an optical performance identical or similar to that of the screen; a substrate layer, having the thickness of 10 microns (µm) to 250 microns (µm); and an adhesion layer, having the thickness of 5 microns (µm) to 200 microns (µm).

In an embodiment of the present invention, the optical layer of the patch sheet employed by the screen flaw repair method according to the present invention comprises a reflective layer, and the reflective layer is made from the same material as a reflective layer of the screen.

In an embodiment of the present invention, the substrate layer of the patch sheet employed by the screen flaw repair method according to the present invention has the thickness of 20 microns (µm) to 125 microns (µm).

In an embodiment of the present invention, the adhesion layer of the patch sheet employed by the screen flaw repair method according to the present invention has the thickness of 5 microns (µm) to 100 microns (µm).

In an embodiment of the present invention, the patch sheet employed by the screen flaw repair method according to the present invention further comprises a release film located on a side of the adhesion layer opposite the substrate layer.

In an embodiment of the present invention, the patch sheet employed by the screen flaw repair method according to the present invention further comprises a removable protective film located on a side of the optical layer opposite the substrate layer, and the attachment direction marker of the one or more repair patch regions is formed on the protective film.

In an embodiment of the present invention, the optical layer of the patch sheet employed by the screen flaw repair method according to the present invention and the substrate layer are made from the same material.

In an embodiment of the present invention, in the screen flaw repair method according to the present invention, an image of the screen is captured by using an optical camera, and the one or more flawed regions are determined according to a brightness change in the image of the screen.

In an embodiment of the present invention, the patch sheet employed by the screen flaw repair method according to the present invention can be easily affixed and removed.

### BRIEF DESCRIPTION OF THE DRAWINGS

FIG. 1 is a schematic front view of a conventional screen.
FIG. 2 is a schematic cross-sectional view of the structure of a patch sheet according to an embodiment of the present invention.
FIG. 3A is a look-up table of specifications of a screen and part numbers of a reflective layer thereof.
FIG. 3B illustrates a portion of a screen production label.
FIG. 4 shows a schematic diagram of a rear surface of a screen.
FIG. 5 is a flowchart of a screen flaw repair method according to an embodiment of the present invention.
FIG. 6A is an entire screen image prior to repair captured by an optical camera according to the present invention.
FIG. 6B is a brightness analysis diagram of a rectangular box image in FIG. 6A.
FIG. 7A to FIG. 7H show photographs of an actual operation result of a screen flaw repair method according to the present invention.
FIG. 8A is an entire screen image after repair captured by an optical camera according to the present invention.
FIG. 8B is a brightness analysis diagram of a rectangular box image in FIG. 8A.
FIG. 9A shows a photograph of a repaired screen according to the present invention.
FIG. 9B shows another photograph of a repaired screen according to the present invention.
FIG. 10A to FIG. 10C show optical comparison photographs of screen flaw repair performed by using repair patches having substrate layers of different thicknesses.
FIG. 11A to FIG. 11C show optical comparison photographs for different repair patch attachment directions (repair directions) according to the present invention.

Description of main reference numerals:
- 201: protective film
- 202: optical layer
- 203: substrate layer
- 204: adhesion layer
- 205: release film
- 400a, 400b: unit panel
- 401: screen bottom side
- 402: screen production label
- 403: joining seam
- 404: printed serial number display region
- 501-507: Step
- d: thickness

### DETAILED DESCRIPTION

The objective of the present invention will be illustrated with reference to the following embodiments in conjunction with the accompanying drawings. It is noted that the following examples and the accompanying drawings are for illustrative purposes only, but are not intended to limit the present invention. It will be appreciated by those skilled in the art that similar structures may be referred to by different terms in the art. Thus, any structure that has the same function as the structural features described in the present invention should fall in the scope of the present invention. The accompanying drawings of the embodiments of the present invention are not drawn according to the size and dimensions of the actual structure, and for the sake of clarity, some features are enlarged to show details of a particular portion. Further, the accompanying drawings may be simplified for clarity, and for example, each component and/or portion and/or detailed structure of a provided particular embodiment is not drawn in the drawings.

The patch sheet of the present invention is made by using the same process and raw material as a screen to be repaired, therefore has an optical performance identical or similar to that of the screen to be repaired, is combined with a thin substrate and a rear surface adhesion layer to manufacture a screen flaw repair patch. The thin substrate can reduce protrusion of an edge of a repair patch when the screen is repaired, and allows the repair patch to be easily affixed to a surface of the screen without warping.

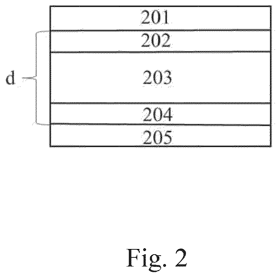

Referring to FIG. 2, FIG. 2 shows an embodiment the structure of a patch sheet structure employed in the present invention. The patch sheet sequentially includes, starting from a front surface of the screen in a normal direction of the screen, a protective film 201, an optical layer 202, a substrate layer 203, an adhesion layer 204, and a release film 205. The protective film 201 is used to protect an optical surface of the screen in a screen repair process to avoid scratching or smudge, and the thickness thereof is not limited, and is generally 20 microns to 188 microns. In this embodiment, the thickness of the protective film 201 is approximately 38 microns. The optical layer 202 has an optical performance identical or similar to that of a screen to be repaired, and has a reflective layer acting as a main optical layer of the screen. In this embodiment, the thickness of the reflective layer is approximately 10 microns. The substrate layer 203 can be made from any flexible material, such as a polycarbonate (PC), polyethylene terephthalate (PET), and the like. The present invention employs the thin substrate layer so as to reduce visibility of an edge of the repair patch and allow the repair patch to be easily conform to the surface of the screen. The thickness of the substrate layer used in the present invention is approximately 10 microns to 250 microns, and is preferably 20 microns to 125 microns. In this embodiment, the substrate layer 203 is made from PET having the thickness of approximately 75 microns. In an embodiment of the present invention, the optical layer 202 may further include, for example, an optical structure coating layer for controlling optical properties of the screen, such as a gain value, a half-brightness angle, polarized contrast, etc., and the optical structure coating layer is located between the optical layer 202 and the substrate layer 203. In an embodiment of the present invention, the substrate layer and the optical layer may be made from the same material. For example, the optical layer can also serve as a substrate, so that the optical layer and the substrate layer do not have boundaries therebetween. The adhesion layer 204 provides sufficient adhesion to allow a repair material to be easily affixed to an object to be repaired. For example, the adhesion layer 204 may be made from an optically clear adhesive, a pressure sensitive adhesive, a silicone-based adhesive, etc. The thickness of the adhesion layer 204 is approximately 5 microns to 200 microns, and is preferably 5 microns to 100 microns. In this embodiment, the adhesion layer 204 is an optically clear adhesive having the thickness of 50 microns. The release film 205 is to protect the adhesion layer so as to facilitate segmentation and delivery of the patch sheet of the present invention and prevent sticking. The release film of the patch sheet of the present invention is used to protect the adhesion layer, and has the thickness about 20 microns to 188 microns. In this embodiment, the thickness of the release film 205 is approximately 50 microns. The protective film and the release film of the patch sheet of the present invention both need to be removed when applied, and the thicknesses thereof are not limited, and can be adjusted, so as to facilitate segmentation and delivery of the patch sheet and allow the patch sheet to be easily manipulated in the screen repair process. The actual application thickness of the repair patch of the present invention is the thickness d shown in FIG. 2.

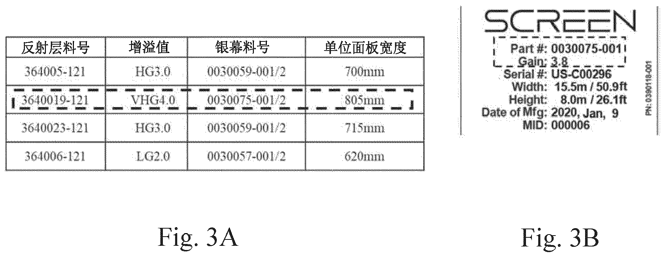

The reflective layer of the patch sheet of the present invention is the main optical layer of the screen, and is made from the material depending on the specifications of the screen to be repaired. The reflective layer of the patch sheet of the present invention and a reflective layer of the screen to be repaired are made from the same material, so that it is easy for the repair patch and the screen to the same or similar optical performance. Referring to FIG. 3A and FIG. 3B, FIG. 3A is a look-up table of specifications of a screen and part numbers of a reflective layer thereof. The specifications of the screen include the width of unit panels joined to form the screen, a gain value of the screen, etc. FIG. 3B illustrates a portion of a screen production label that can be affixed to a rear surface of the screen. For example, information, as shown at a dashed box, such as a part number, a gain value, etc. of the screen shown by the screen production label can be used to search the look-up table in FIG. 3A to find a part number of the reflective layer of the screen, and the width of the unit panel of the screen, as shown in the dashed box. Accordingly, the present invention can select a patch sheet having the same reflective layer material as the screen.

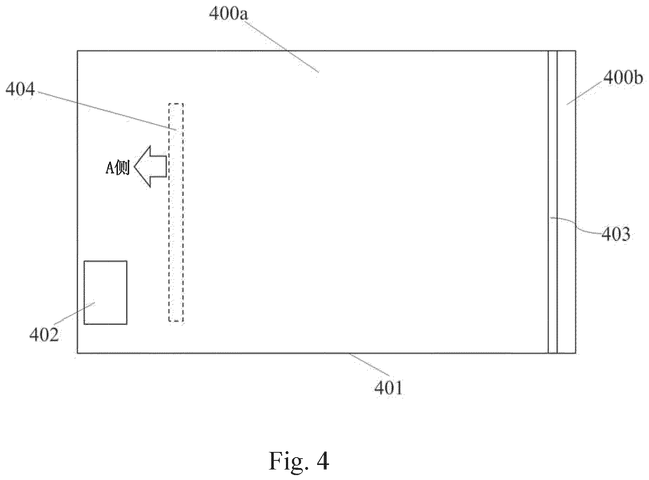

Referring to FIG. 4, FIG. 4 is a schematic diagram of a rear surface of a screen, and a screen production label 402 thereof is mounted near a lower left corner of a screen bottom side 401. A side dashed box region on the rear surface of the screen opposite a joining seam 403 of adjacent unit panel 400a, 400b is a printed serial number display region 404, and has a printed serial number (not shown). The printed serial number includes information such as screen material number, etc. An opposite side on the side of the joining seam 403 of the unit panels of the screen is defined as a side A, and the side A may be referred to as a unit panel mounting side. In an embodiment of the present invention, a joining direction of the unit panels of the screen may be defined by means of the side A. For example, the joining direction of the unit panels is defined to be from the mounting side to the joining seam side. Adjacent unit panels are joined in the same joining direction.

The following describes steps of a screen flaw repair method according to the present invention.

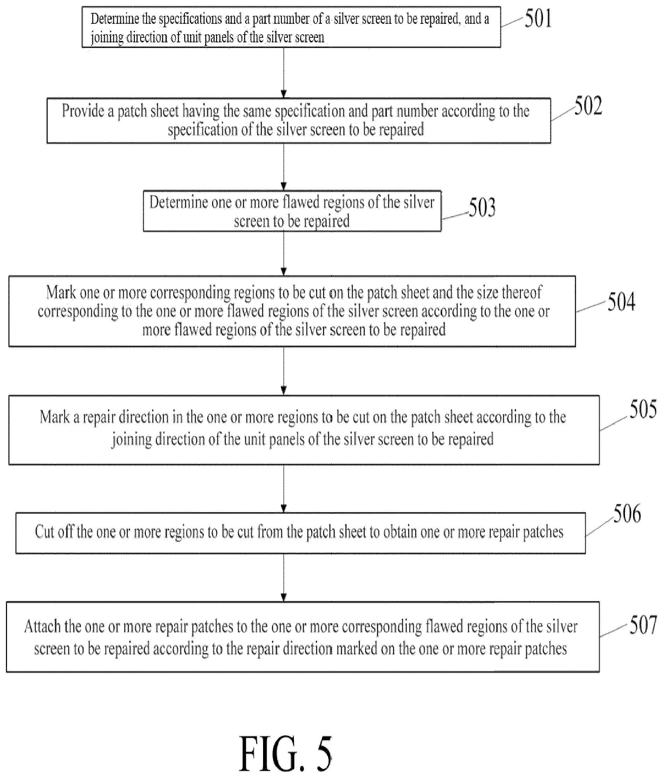

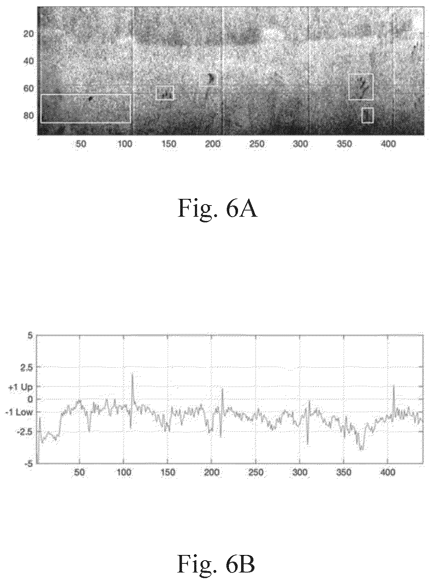

Referring to FIG. 5, FIG. 5 is an embodiment of a screen flaw repair method according to the present invention. First, in step 501, first determine the specifications and a part number of a screen to be repaired, and a joining direction of screen unit panels of the screen. In this embodiment, the specifications of the screen may refer to the width of the unit panels joined to form the screen, and the part number of the screen may refer to a part number of a reflective layer thereof, as shown in FIG. 3A. Next, in step 502, providing a patch sheet having the same specifications and part number according to the specifications and part number of the screen to be repaired. In this implementation, the patch sheet having the same specifications and part number may mean that the patch sheet has a reflective layer, the reflective layer and the unit panel of the screen to be repaired having the same width and being made from the same material. Next, in step 503, determining one or more flawed regions of the screen to be repaired. Referring to FIG. 6A, in an embodiment of the present invention, the present invention may capture an image of the entire screen to be repaired by means of an optical camera, and capture an image area including black spots in the image so as to perform image brightness analysis. For example, images of five rectangular box areas in FIG. 6A are captured to perform image brightness analysis to acquire a result shown in FIG. 6B. It can be seen from FIG. 6B that a brightness difference at the corresponding black spot on the screen is reduced by 2.5% or more. These black spots represent flawed regions on the unit panels joined to form the screen, and reduce stereo contrast in 3D movies in addition to affecting brightness non-uniformity, thereby affecting the quality of movie-watching. Next, in step 504, marking one or more corresponding regions to be cut of the patch sheet and the size in a region on the patch sheet corresponding to the one or more flawed regions of the screen according to the one or more flawed regions of the screen to be repaired, so as to ensure that the region to be cut corresponds to and covers the flawed region of the screen to be repaired, wherein in addition, visibility of a patch (referred to as a patch sheet hereinafter) having a regular edge can be reduced by means of a cut having an irregular boundary shape. Next, in step 505, marking a repair direction in the one or more regions to be cut on the patch sheet according to the joining direction of the unit panels of the screen to be repaired, which refers to an affixing direction of the patch sheet in the flawed region of the screen herein. Next, in step 506, cutting off the one or more regions to be cut from the patch sheet to obtain one or more repair patches. Next, in step 507, attaching the one or more repair patches to the one or more corresponding flawed regions of the screen to be repaired according to the repair direction marked on the one or more repair patches, so that the repaired flawed region of the screen still maintains consistent optical performance at different viewing angles.

In addition, screen cleaning work can be performed prior to repair of the flawed region of the screen. A surface of the screen is gently brushed with foamed plastic or cotton cloth, so as to remove dust and smudges to recover the optical performance of the screen.

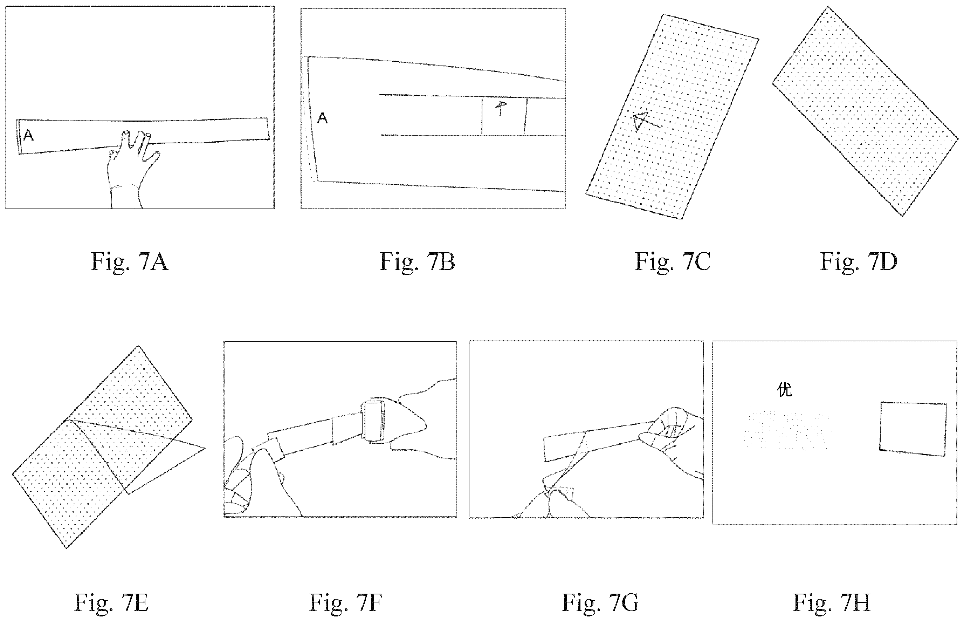

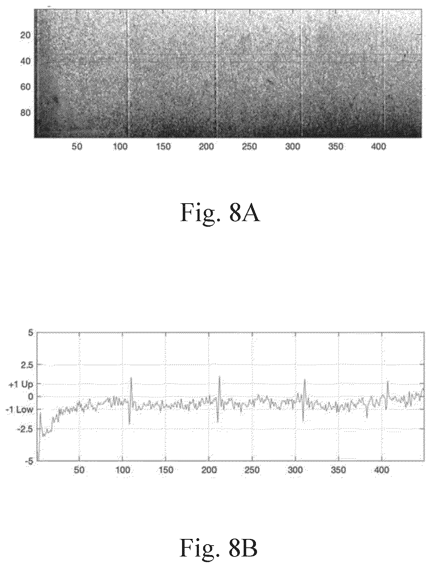

The following is an example of the actual operation of the screen flaw repair of the present invention shown in FIGS. 7A to 7G. In FIG. 7A, after it was determined according to step 503 that a flawed region was present on a unit panel of the screen, causing a patch sheet having the same width and the same reflective layer material as the unit panel to cover the flawed region of the unit panel in a manner in which the protective film thereof faces upwards and the side A of the patch sheet corresponded to the side A of the screen cover, wherein the patch sheet was aligned with the unit panel in a widthwise direction. In an embodiment of the present invention, an engineer performing repair can visually determine the position of a flaw on the unit panel, and mark, on the protective film of the patch sheet, a region to be cut corresponding to the flawed region of the unit panel and an affixing direction thereof (i.e., the repair direction) indicated by the direction of an arrow shown in FIG. 7B. The region to be cut was cut off from the patch sheet so as to acquire the repair patch. A front surface of the repair patch is shown in FIG. 7C. In the present invention, the side of the repair patch provided with the protective film is regarded as the front side of the repair patch, and the side of the repair patch provided with the release film is regarded as the rear side of the repair patch, as shown in FIG. 7D. Next, the release film on the rear side was pulled by a non-marking tape to expose the adhesion layer, and it was ensured that the repair patch was wrinkle-free, as shown in FIG. 7E. Next, a rubber wheel was rolled from one side to the other side, and the attachment was performed sequentially, as shown in FIG. 7F. Next, as shown in FIG. 7G, the protective film on the front side was pulled by a non-marking tape, and an optical inspection was performed to determine whether an obvious difference from the screen at the bottom was present in different views, thereby completing the screen flawed region repair project. In an embodiment of the present invention, as shown in FIG. 8A, the present invention can capture an image of the entire screen after the repair by using the optical camera, and capture an image of the corresponding flawed region having been repaired by using the repair patch in FIG. 6A, so as to perform brightness change analysis to acquire a brightness analysis result in FIG. 8B. It can be seen from FIG. 8B that after the flawed region of the screen is repaired, the entire screen restores uniform brightness.

Further, as shown in FIG. 7H, the repair engineer can visually confirm whether an attachment surface of the repair patch is smooth and free of protrusions. If not, the repair patch needs to be removed and cut again to perform repair.

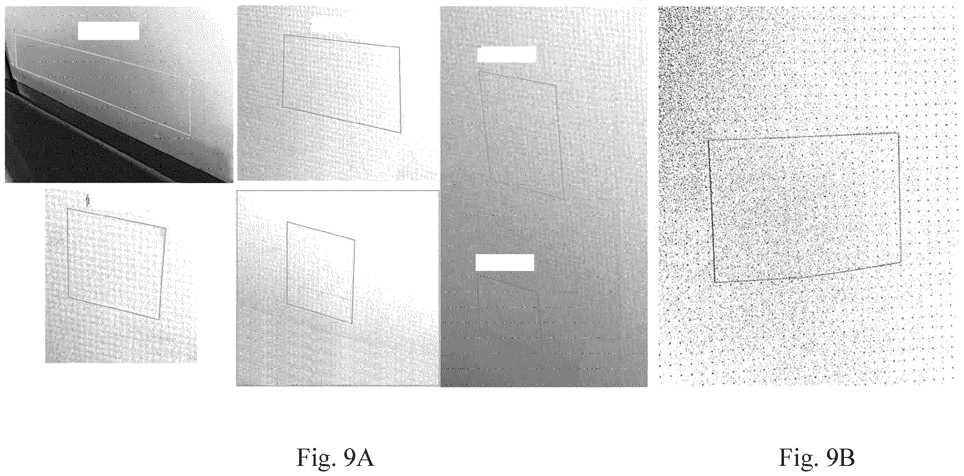

Referring to FIG. 9A, FIG. 9A shows a photograph of an actual operation result after the screen flaw repair procedure according to the present invention, where six screen repair patches are sequentially affixed to a damaged region of the screen. Further, as shown in the photograph in FIG. 9B, in the present invention, when the repair patch is attached to the flawed region of the screen, a sound transmission hole thereof is substantially aligned with a sound transmission hole of the screen.

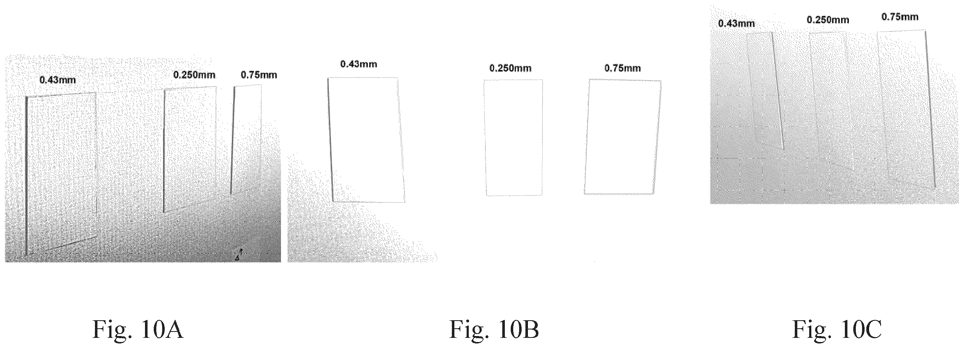

Optical comparison of the repair of the flaw of the screen performed by using the repair patches having the substrate layers of different thicknesses is illustrated in FIG. 10A, FIG. 10B, and FIG. 10C, showing photographs of appearance in different viewing angles of the repair patches having the substrate layers of thicknesses of 0.43 millimeters (mm), 0.25 millimeters (mm), and 0.75 millimeters (mm) respectively attached to the flawed regions of the screen. It can be seen from the photographs that when the thickness of the substrate layer of the repair patch attached to the flawed region of the screen is greater than 0.25 millimeters (mm), an obvious drop height is present between the edge thereof and the screen.

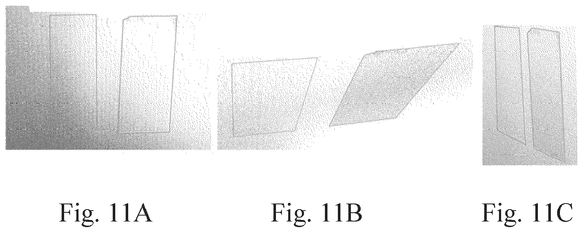

The different optical comparison of the repair patch attachment direction (repair direction) of the present invention is illustrated in FIG. 11A, FIG. 11B, and FIG. 11C, showing photographs of appearance in different viewing angles when the repair patch attachment direction is consistent with the joining direction of the screen (A-side direction) and when the repair patch attachment direction is opposite to the joining direction of the screen (A-side direction). FIG. 11A is a photograph taken at a front view angle. FIG. 11B a photograph taken at an oblique view angle. FIG. 11C a photograph taken at a side view angle. It can be seen from the photographs that when the repair patch attachment direction is opposite to the joining direction of the screen, an obvious difference is present between the brightness of the repair patch and the brightness of the surrounding screen region in the oblique view angle and the side view angle.

The above descriptions are merely specific embodiments of the present invention, and are not intended to limit the scope of the claims of the present invention. All other equivalent changes or modifications made without departing from the spirit disclosed in the present invention fall within the scope of the claims.

## Claims

1. A screen repair patch, comprising:
an optical layer;
a substrate layer, having a thickness of 10 microns to 250 microns; and
an adhesion layer, having a thickness of 5 microns to 200 microns.

2. The screen repair patch according to claim 1, wherein the optical layer comprises a reflective layer.

3. The screen repair patch according to claim 1 or 2, further comprising a release film located on a side of the adhesion layer opposite the substrate layer.

4. The screen repair patch according to any preceding claim, further comprising a protective film located on a side of the optical layer opposite the substrate layer.

5. The screen repair patch according to any preceding claim, wherein the optical layer and the substrate layer are made from the same material.

6. The screen repair patch according to any preceding claim, in combination with a screen to be repaired, wherein the optical layer has an optical performance identical or similar to that of the screen to be repaired.

7. A repaired screen comprising a screen with a flawed region, and a screen patch according to any preceding claim attached to the flawed region of the screen, wherein the optical layer has an optical performance identical or similar to that of the screen.

8. A screen flaw repair method, comprising:
providing a screen, wherein the screen has a joining direction, and is formed by joining a plurality of unit panels in the joining direction;
determining one or more flawed regions of the screen;
providing a patch sheet, wherein an optical performance of the patch sheet is identical or similar to that of the screen;
defining one or more corresponding repair patch regions on the patch sheet according to the one or more flawed regions of the screen, wherein the one or more repair patch regions are respectively capable of covering the one or more corresponding flawed regions, and forming, on each repair patch region, an attachment direction marker that is removable and parallel to the joining direction of the screen;
cutting the one or more repair patch regions off from the patch sheet, so as to acquire one or more repair patches; and
respectively attaching the one or more repair patches to the one or more corresponding flawed regions of the screen according to the attachment direction marker.

9. The screen flaw repair method according to claim 8, wherein the patch sheet has the width identical to the width of the unit panel of the screen, and one or more corresponding repair patch regions corresponding to the one or more flawed regions are defined on the patch sheet according to the one or more flawed regions of the screen.

10. The screen flaw repair method according to claim 8 or 9, wherein when the one or more repair patches are attached to the one or more corresponding flawed regions of the screen, a sound transmission hole of the one or more repair patches is substantially aligned with a sound transmission hole of the screen.

11. The screen flaw repair method according to claim 8, 9, or 10, wherein the patch sheet comprises:
an optical layer, having an optical performance identical or similar to that of the screen;
a substrate layer, having the thickness of 10 microns to 250 microns; and
an adhesion layer, having the thickness of 5 microns to 200 microns.

12. The screen flaw repair method according to claim 11, wherein the optical layer of the patch sheet comprises a reflective layer, and the reflective layer is made from the same material as a reflective layer of the screen.

13. The screen flaw repair method according to claim 11 or 12, wherein the patch sheet further comprises a release film located on a side of the adhesion layer opposite the substrate layer.

14. The screen flaw repair method according to claim 11, 12, or 13, wherein the patch sheet further comprises a removable protective film located on a side of the optical layer opposite the substrate layer, and the attachment direction marker of the one or more repair patch regions is formed on the protective film.

15. The screen flaw repair method according to any of claims 8 to 14, wherein in the step of determining one or more flawed regions of the screen, an image of the screen is captured by using an optical camera, and the one or more flawed regions are determined according to a brightness change in the image of the screen.
